(19) Europäisches Patentamt
European Patent Office
Office européen des brevets

(11) EP 4 174 532 A1

(12) EUROPEAN PATENT APPLICATION

(43) Date of publication:
03.05.2023 Bulletin 2023/18

(21) Application number: 21306506.3

(22) Date of filing: 27.10.2021

(51) International Patent Classification (IPC):
*G02B 1/04* (2006.01) *G02C 7/10* (2006.01)

(52) Cooperative Patent Classification (CPC):
(C-Sets available)
**G02C 7/104;** G02C 2202/10 (Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Essilor International**
**94220 Charenton-Le-Pont (FR)**

(72) Inventors:
- **FRENCH, Elliot**
  **Charlton, MA 01507 (US)**
- **CHIU, Hao-Wen**
  **Holden, MA 01520 (US)**
- **SHAN, Haifeng**
  **Shrewsbury, MA 01545 (US)**
- **JALLOULI, Aref**
  **Shrewsbury, MA01545 (US)**

(74) Representative: **Jacobacci Coralis Harle**
**32, rue de l'Arcade**
**75008 Paris (FR)**

# (54) TRANSPARENT OPTICAL ARTICLE WITH INCREASED BLUE LIGHT CUTTING ABILITY AND SUPERIOR AESTHETICS

(57) The invention relates to a transparent optical article comprising a thermoplastic substrate, at least one UV absorber and at least one fluorescing dye at least partially inhibiting transmission of light having a wavelength ranging from 400 to 500 nm, wherein the spectral transmission curve of said transparent optical article has a light cut-off wavelength higher than or equal to 400 nm and an inflection point at a wavelength ranging from 400 to 450 nm, and the slope at said inflection point is higher than or equal to 6 %/nm. The substrate is preferably a polycarbonate, the UV absorber is a benzo-triaziole, and the fluorescent dye is a benzo-axolyle.

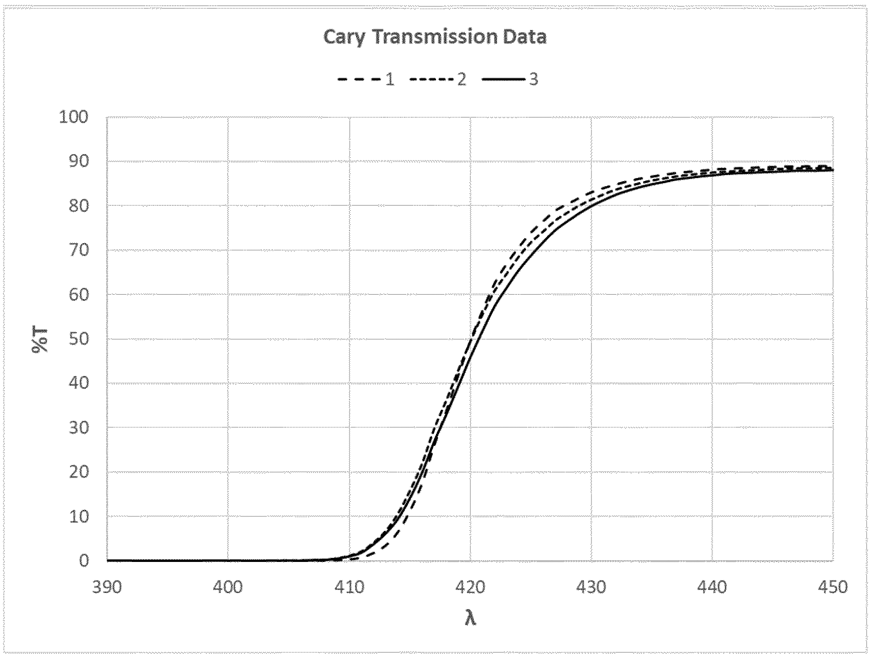


Figure 3

(52) Cooperative Patent Classification (CPC): (Cont.)

C-Sets
**G02B 1/041, C08L 2666/70, C08K 5/0041**

## Description

The present invention relates to the optics field, more particularly to transparent optical articles and preferably ophthalmic lenses, maintaining good aesthetics, including a mostly colorless appearance while comprising an optical filter intended to protect from blue light and UV light.

Visible light as perceived by humans approximately extends over a spectrum ranging from a 380 nm wavelength to a 780 nm wavelength. The part of this spectrum, ranging from around 380 nm to around 500 nm, does correspond to high-energy light, essentially blue-violet light.

Many studies (see for example Kitchel E., "The effects of blue light on ocular health », Journal of Visual Impairment and Blindness Vol. 94, No. 6, 2000 or Glazer-Hockstein and al., Retina, Vol. 26, No. 1. pp. 1-4, 2006) suggest that blue light (around 430 nm) has phototoxic effects on human eye health, and especially on the retina.

Indeed, ocular photobiology studies (Algvere, P. V. et al., "Age-Related Maculopathy and the Impact of the Blue Light Hazard », Acta Ophthalmo. Scand., Vol. 84, pp. 4-15, 2006) and clinical trials (Tomany S.C. and al., "Sunlight and the 10-Year Incidence of Age-Related Maculopathy. The Beaver Dam Eye Study », Arch Ophthalmol. Vol. 122. pp. 750-757, 2004) demonstrated that an excessively prolonged or intense exposure to blue light may induce severe ophthalmic diseases such as age-related macular degeneration (ARMD) or cataract.

ISO 8980-3 standard (2003) defines at Table B.1 the blue light hazard function B(λ), which relates to the sensitivity of the human eye to low wavelength spectrum emissions. In view of this function, it is recommended to limit the exposure of the eyes to blue light potentially harmful, in particular as regards the wavelength band with an increased dangerousness (420-455 nm).

Eyeglasses are particularly suitable to offer protection against transmission of potentially harmful blue light to the retina. Such lenses may also provide increased visual performance due to increased contrast sensitivity. It is furthermore necessary to eliminate as much as possible the harmful influence of ultraviolet light (UV light) on the eye of a wearer of the lens.

It has already been suggested, for example in the patent application WO 2008/024414, to cut at least partially the troublesome part of the blue light spectrum from 400 nm to 460 nm by means of lenses comprising a film partially inhibiting the light in the suitable wavelength range, through absorption or through reflection. This can be done by incorporating a yellow dye into the optical element.

EP 1580591 relates to a polarized lens dyed such that said optical part exhibits a curve of spectral transmittance in a wavelength range comprised between 400 and 700 nm comprising at least one relative maximum at a wavelength comprised between 400 and 510 nm and at least one relative minimum at a wavelength comprised between 510 to 625 nm, resulting in a lens having a low transmission in the visible range.

EP 0197508 discloses a polycarbonate composition for optical purposes comprising a polycarbonate resin and a 2-hydroxyphenyl benzotriazole UV-stabilizing compound, which fails to provide a sufficient protection from blue light and satisfactory aesthetics.

WO 2015/097492 discloses a transparent optical article comprising a thermoplastic substrate, at least one dye at least partially inhibiting light having a wavelength ranging from 400 to 460 nm, at least one UV absorber and at least one optical brightener for at least partially balancing the color imparted to the transparent optical article by the dye, wherein said at least one fluorescing dye emits light by fluorescence at a wavelength ranging from 400 to 460 nm, the optical brightener being incorporated into at least one layer fused or bonded to the thermoplastic substrate. In this application, the optical brightener is used as a color balancing means to avoid lens yellowness caused by blue light blocking, and it is not incorporated in the same layer or substrate as the UV absorber so that the latter does not interfere with the ability of the optical brightener to emit light by fluorescence. When the UV absorber and the optical brightener are separated, the optical brightener's fluorescence can be triggered at maximum level. Further, the level of blue light protection provided by the lens is insufficient, since the cut-off wavelength is lower than 400 nm.

WO 97/30362 discloses a composition suitable for forming a stable color-neutral, transparent coating for plastic lenses which comprises a polysiloxane matrix, an ultraviolet absorber, and an anthracenedione dye to neutralize the yellow color caused by said ultraviolet absorber. The level of blue light protection provided by the lens is insufficient, since the cut-off wavelength is lower than 400 nm, and its aesthetics is not satisfactory.

US 5806834 relates to an ultraviolet-absorbing polymer film which comprises cellulose triacetate and ultraviolet absorbers, which fails to provide a sufficient protection from blue light (cut-off wavelength lower than 400 nm).

In view of the foregoing, there is a need for an optical article capable of providing a high level of protection against harmful blue light and UV light, that can further provide acceptable color cosmetics, i.e., that is perceived as mostly colorless by someone observing the optical article. An acceptable overall level of light transmission in the visible range is also needed, i.e., good transparency, as well as acceptable color and contrast perception for a user looking through the article, i.e., the optical article should not impair dramatically the wearer's color vision and contrast in the case of an ophthalmic system. In particular, there is a need for an optical article that allows for selective blockage of wavelengths of blue light while at the same time transmitting at least 80% of visible light.

A specific objective of the present invention in terms of protection from blue light is to provide an optical article having an average light transmission factor from 415 nm to 444 nm lower than or equal to 80 %, in order to be compliant with the China national institute of standardization (CNIS) requirement on blue light cut, while maintaining exceptional aesthetics and being inexpensive to produce. Indeed, most existing technical solutions sacrifice either costs or aesthetics to pass this CNIS specification.

It is another object of the present invention to provide an optical article with the hereinabove mentioned properties, which would be easy and economical to implement on the industrial level. Its manufacturing process should be easily integrated into the classical manufacturing chain.

The present inventors discovered that these objectives could be achieved by the use of a fluorescent dye (fluorescing dye) having specific spectrum characteristics, employed as a blue light cutting means, in combination with a non-fluorescent UV absorber that reduces the fluorescence emission of the fluorescing dye. These two compounds added together provide a synergy by which very good aesthetics can be obtained for the resulting optical article, while color cosmetics, transparency or contrast are diminished when each of these compounds is used alone.

Thus, the present invention relates to a transparent optical article comprising a thermoplastic substrate, at least one UV absorber and at least one fluorescing dye at least partially inhibiting transmission of light having a wavelength ranging from 400 to 500 nm, wherein the spectral transmission curve of said transparent optical article has a light cut-off wavelength higher than or equal to 400 nm and an inflection point at a wavelength ranging from 400 to 450 nm, and the slope at said inflection point is higher than or equal to 6 %/nm, and the transparent optical article has an average fluorescence as determined according to the standard ASTM E1247 lower than or equal to 2 % in the range from 415 nm to 445 nm. The said fluorescing dye and said UV absorber are different from each other.

The present optical article is provided with a light absorption filter to partially block UV light and at least part of the blue light. Thus, it eliminates the harmful UV light and reduces the phototoxic blue light global transmission to the retina of a user wearing an optical lens made of said optical article, and provides a high level of retinal cell protection against retinal cell apoptosis or age-related macular degeneration.

The approach consisting of using a fluorescent compound as blue light cutting means is rather unusual. Indeed, sharp cutting blue cut dyes have been proposed in patent applications and by certain dye suppliers to improve aesthetics. However, such dyes are often fluorescent or have poor thermal stability or photostability. In the field of ophthalmic wear, fluorescent dyes are typically avoided because they create an unattractive appearance when added to lenses and cause poor contrast for the wearer.

## BRIEF DESCRIPTION OF THE DRAWINGS

The foregoing and other objects, features and advantages of the present invention will become readily apparent to those skilled in the art from a reading of the detailed description hereafter when considered in conjunction with the accompanying drawings, wherein figure 1a depicts the fraction of light detected by the Hunter UltraScan PRO spectrophotometer between 390 and 750 nm of various lenses and comparative lenses described in the experimental part (including fluorescence and light reflected from the lens surface), figure 1b depicts the fluorescence as determined according to the standard ASTM E1247 between 390 and 750 nm of various lenses according to the invention and of comparative lenses described in the experimental part, figures 2 and 3 depict the light transmission curves detected by the Cary 60 spectrophotometer between 390 and 450 nm of various lenses and comparative lenses described in the experimental part, figure 4a shows the variation of the extinction coefficient as a function of wavelength for the fluorescing dye OB-4 in polycarbonate, figure 4b providing a zoom of figure 4a to show the variation within the wavelengths between 420 nm to 450 nm. Figure 5a shows the variation of the extinction coefficient as a function of wavelength for the UV absorber Tinuvin 326 in polycarbonate, figure 5b providing a zoom of figure 5a to show the variation within the wavelengths between 420 nm to 450 nm. Figure 6 shows the calculated surface reflection for the control lens, which is useful to determine the amount of fluorescence from figure 1a, as detailed in the experimental part. The control lens is made of the same polycarbonate resin used to produce the examples in table 1. Figure 7 illustrates how the slope at inflection is calculated from the Cary 60 transmission curves.

## DETAILED DESCRIPTION OF THE INVENTION AND PREFERRED EMBODIMENTS

As used herein, when an article comprises one or more layer(s) or coating(s) on the surface thereof, "depositing a layer or a coating onto the article" means that a layer or a coating is deposited onto the uncovered (exposed) surface of the article external coating, that is to say the coating that is the most distant from the substrate.

As used herein, a coating/layer that is "on" a substrate/coating or which has been deposited "onto" a substrate/coating is defined as a coating/layer that (i) is positioned above the substrate/coating, (ii) is not necessarily in contact with the substrate/coating, that is to say one or more intermediate coating(s) may be interleaved between the substrate/coating and the relevant coating/layer (however, it does preferably contact said substrate/coating), and (iii)

does not necessarily completely cover the substrate/coating. When "a coating/layer 1 is said to be located under a coating/layer 2", it should be understood that coating/layer 2 is more distant from the substrate than coating/layer 1.

In the present description, an optical article is understood to be transparent when the observation of an image through said optical article is perceived with no significant loss of contrast, that is, when the formation of an image through said optical article is obtained without adversely affecting the quality of the image. This definition of the term "transparent" can be applied to all objects qualified as such in the description.

The transparent optical article according to the invention is preferably an optical lens or lens blank, more preferably an ophthalmic lens or lens blank.

The term "ophthalmic lens" is used to mean a lens adapted to a spectacle frame to protect the eye and/or correct the sight. Said lens can be chosen from afocal, unifocal, bifocal, trifocal and progressive lenses. Although ophthalmic optics is a preferred field of the invention, it will be understood that this invention can be applied to transparent optical elements of other types, such as, for example, lenses for optical instruments, filters particularly for photography or astronomy, optical sighting lenses, ocular visors, optics of lighting systems, etc.

The transparent optical article comprises a thermoplastic substrate and generally at least one layer coated on the substrate. If it is an optical lens, it may be coated on its convex main side (front side), concave main side (back side), or both sides. The transparent optical article can also be a plano article.

A substrate, in the sense of the present invention, should be understood to mean an uncoated substrate, and generally has two main faces. The substrate may in particular be an optically transparent material having the shape of an optical article, for example an ophthalmic lens destined to be mounted in glasses. In this context, the term "substrate" is understood to mean the transparent base constituent material of the optical lens and more particularly of the ophthalmic lens. This material acts as support for the stack of one or more coatings or layers.

The substrate of the article of the invention is an organic glass made from a thermoplastic material, generally chosen from transparent materials of ophthalmic grade used in the ophthalmic industry.

To be mentioned as especially prefered classes of substrate polymer materials are polycarbonates such as those derived from bisphenol-A, polyamides, polyesters, polyurethanes, polysulfones, amorphous polyolefins, polyethylene, polypropylene, poly(acrylonitrile), poly(vinyl acetate), poly(vinyl chloride), poly(butadiene), cyclic olefin copolymers, polystyrene, poly(meth)acrylic resins such as polymethyl(meth)acrylate, poly(n-butyl methacrylate), poly(isobutyl methacrylate), poly(ethyl methacrylate), polycarbonate/polyester blends, polyvinyl alcohol, polyvinyl formal, cellulose acetate butyrate, polyvinylacetal, saponified (ethylene/vinyl acetate) copolymers, copolymers of any of these, and mixtures of any of these.

The preparation of thermoplastic substrates, e.g., by injecting molten thermoplastic resin into a substrate-forming cavity held closed under a clamp force, is well known to those skilled in the art and is described, for example, in US 2009/283926, US 2009/283924 and US 6,328,446.

Polycarbonates are the preferred substrate materials, but they only block light wavelengths below 290 nm. Commercial examples of polycarbonate resins that can be used in the context of the present invention are Panlite from Teijin, Iupilon from Mitsubishi Engineering-Plastics Corp., Lexan from Sabic, Makrolon from Covestro, Lupoy from LG Chemical.

The transparent optical article comprises at least one UV absorber, which can be incorporated into the substrate and/or into at least one layer coated or laminated on the substrate. It is preferably incorporated into the substrate, and is preferably non-fluorescent.

The UV absorber has the ability to at least partially block light having a wavelength shorter than 400 nm, preferably UV wavelengths below 385 or 390 nm, and more preferably the 300-380 nm wavelength range (figure 5a). Said UV absorber both protects the user's eye from UV light and the substrate material itself, thus preventing it from weathering and becoming brittle and/or yellow. In one embodiment, the UV absorber also partially blocks blue light in the 400-500 nm or 400-460 nm range, and thus protects from blue light and UV light. Preferably, the UV absorber used does not emit fluorescence in the visible region of light.

Suitable UV absorbers include, without limitation to these families, benzotriazoles such as 2-(2-hydroxyphenyl)-benzotriazoles, allyl hydroxymethylphenyl benzotriazoles, 2-hydroxy-5-acryloxyphenyl-2H-benzotriazoles (disclosed, e.g., in disclosed in US 4528311), 2-(3'-methallyl-2'-hydroxy-5'-methylphenyl) benzotriazoles, benzophenones such as 2-hydroxybenzophenone and substituted 2-hydroxybenzophenones disclosed in US 4304895, benzotriazines, benzoxaxinones, cinnamates (such as 2-ethylhexyl p-methoxycinnamate or octyl p-methoxycinnamate), phenyl salicylate esters, cyanoacrylates, malonates, octocrylenes (such as 2-ethylhexyl 2-cyano-3,3-diphenyl acrylate), oxanilides, 4-*tert*-butyl-4'-methoxydibenzoylmethane (marketed under the trade name PARSOL® 1789 by Givaudan), PBSA (sodium salt of 2-phenyl-benzimidazole-5-sulfonic acid, marketed under the trade name PARSOL® HS by Givaudan), inorganic UV absorbers such as $TiO_2$, or ZnO. Specific examples of commercially available UV absorber families are Tinuvin® from BASF, Uvinul® from BASF (such as UVINUL® M 40: 2-hydroxy-4-methoxybenzophenone or UVINUL® MS 40: 2-hydroxy-4-methoxybenzophenone-5-sulfonic acid), Seesorb® from Shipro Kasei Kaisha, Chiguard® from Chitec Technology Corp., Lowilite® from Addivant. 2-hydroxybenzophenones and 2-(2-hydroxyphenyl)-benzotriazoles are preferred.

It is also possible to use polymers having anti-UV properties, especially polymers comprising benzylidene camphor groups and/or benzotriazole groups, substituted with sulfonic or quaternary ammonium groups. They may be used alone or in admixture with other UV absorbers.

The most preferred UV absorber is 2-(5-chloro-2H-benzotriazol-2-yl)-6-(1,1-dimethylethyl)-4-methyl phenol (Tinuvin® 326), which is a non-fluorescent UV absorber represented hereunder that also absorbs in the blue light range:

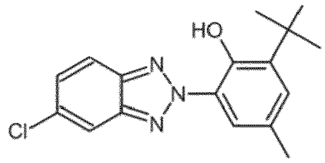

The transparent optical article comprises at least one fluorescing dye, also called fluorescent whitening agent (FWA), optical brightening agent (OBA) or fluorescent brightening agent (FBA), which is preferably incorporated into the substrate.

The fluorescing dye is used in the present invention as a blue light cutting agent that at least partially blocks light having a wavelength ranging from 400 to 460 nm (or 400-500 nm), preferably from 420 to 450 nm, by absorption. Thus, it represents a "blue cut filter" and is useful for protection purposes, in particular the eyes of an ophthalmic lens wearer. In one embodiment, the fluorescing dye also has the ability to at least partially block UV light having preferably a wavelength ranging from 300 to 380 nm, and thus protects from blue light and UV light.

As well known, fluorescing dyes are substances that absorb light in the UV and violet region (usually at 340-410 nm) and re-emit light by fluorescence mainly in the blue region of the visible spectrum. Generally, the fluorescing dye emits light by fluorescence with a maximum fluorescence emission peak within the wavelength range of from 400 nm to 500 nm, preferably from 400 to 460 nm. Preferred fluorescing dyes have low fluorescence efficiency, i.e., re-emit as visible light a minor proportion of the energy they have absorbed. Excessive fluorescence is thus not encouraged, contrary to the requirement of WO 2015/097492.

Fluorescing dyes with sharp cutting absorbance characteristics from 400 nm to 500 nm, but with less fluorescence emission within this range would require to be mixed with less UV absorber, thereby achieving higher slope at the inflection point for the transmission curve.

The transparent optical article has an average fluorescence as determined according to the standard ASTM E1247 lower than or equal to 2 % in the range from 415 nm to 445 nm, preferably lower than or equal to 1.75 %, 1.5 % or 1 %, and preferably higher than or equal to 0.1%, 0.2%, 0.3%, 0.4% or 0.5%. When the average fluorescence is too high, poor aesthetics and decreased contrast may be obtained. The average fluorescence is preferably measured with an UltraScan PRO spectrophotometer from HunterLab.

The chemical nature of the fluorescing dye is not particularly limited, provided that it is capable of at least partially blocking blue light.

The fluorescing dye may have an absorption or maximum absorption peak between 300 and 450 nm, preferably 350 nm to 400 nm, and preferably has some absorption in the range from 400 nm to 460 nm, more preferably in the range from 400 nm to 435 nm (figure 4a). As used herein, having an absorption peak in a range of wavelengths means that the maximum of the absorption peak falls within this range, said absorption being measured by obtaining an absorption spectrum (absorbance as a function of wavelength) of the optical article having the optical filtering means incorporated therein.

The fluorescing dye preferably has a sharp cutting band edge that decreases in absorption in the 420-450 nm range (Figure 4b). Ideally, said sharp cutting absorption band edge can be defined with the extinction coefficients at 420 nm and 450 nm so that at 420 nm it is as large as possible and at 450 nm is as low as possible, ideally zero. With such a profile, a sharp cutting transmission curve can be obtained. For example, the extinction coefficient of the preferred fluorescing dye (OB-4) at 420 nm in polycarbonate is greater than 3.5 L x $g^{-1}$ x $cm^{-1}$ while the extinction coefficient at 450 nm is 0.007 L x $g^{-1}$ x $cm^{-1}$. Expressed as a ratio, the extinction coefficient at 420 nm to 450 nm is equal to 494 for the preferred fluorescing dye. In other words, the extinction at 420 nm is 494 times higher than at 450 nm. Thus, OB-4 will provide a sharp cutting transmission curve in the blue light region of interest.

Preferably, the fluorescing dye acting as a means for at least partially inhibiting transmission of light having a wavelength ranging from 400 to 460 nm (or 400-500 nm) selectively inhibits light within the 400 nm - 460 nm range (or 400-500 nm), and more preferably within the 420 nm - 450 nm range. As used herein, a means "selectively inhibits" a wavelength range if it inhibits at least some transmission within the range, while having little or no effect on transmission of wavelengths neighboring the wavelength range.

The one or more fluorescing dyes incorporated in the transparent optical article preferably absorb radiation such that they inhibit from 1 to 50 % of light transmission of having a wavelength ranging from 400 to 500 nm (or 400

to 460 nm), more preferably from 10 to 40 %, ideally from 10 to 30 %. They preferably inhibit from 1 to 50 % of the light transmission having a wavelength ranging from 420 to 450 nm, more preferably from 10 to 40 %, ideally from 10 to 30 %. These absorptions can be controlled by the fluorescing dye concentration and are measured relative to the amount of light that would be transmitted at the same wavelengths in the absence of the fluorescing dye.

In one embodiment, the fluorescing dye inhibits from 10 to 50 % of transmission of light having a wavelength ranging from 410 to 440 nm.

The fluorescing dye may be chosen, without limitation to these families, from butadienes, stilbenes, carbostyrils, coumarins, porphyrins, oxonols, pyrazolines such as 1,3-diphenyl-2-pyrazolines, naphthalimides, combined heteroaromatics (such as pyrenyl-triazines or other combinations of heterocyclic compounds such as thiazoles, pyrazoles, oxadiazoles, fused polyaromatic systems or triazines, directly connected to each other or through a conjugated ring system) benzoxazoles, in particular benzoxazoles substituted at the 2-position with a conjugated ring system, preferably comprising ethylene, phenylethylene, stilbene, benzoxazole and/or thiophene groups. Preferred families of fluorescing dyes are bis-benzoxazoles, phenylcoumarins, methylcoumarins and bis-(styryl)biphenyls, which are described in more details in A. G. Oertli, Plastics Additives Handbook, 6th Edition, H. Zweifel, D. Maier, M. Schiller Editors, 2009.

Specific examples of commercially available bis-benzoxazole fluorescing dyes are Eastobrite® compounds from Eastman Chemical, such as Eastobrite® OB, Eastobrite® OB-1 and Eastobrite® OB-3, Hostalux® compounds from Clariant, such as Hostalux ACK, Hostalux CP01, Hostalux EBU, Hostalux EF, Hostalux ERE, Hostalux EREN, Hostalux ES2R, Hostalux ESR, Hostalux ETB 300, Hostalux ETBN, Hostalux KCB, Hostalux KS, Hostalux KS1B, Hostalux KSB3, Hostalux KSC, Hostalux KSN, Hostalux NR, Hostalux NSM, Hostalux PFC, Hostalux PFCB, Hostalux PN, Hostalux PNB, and Hostalux PR, Whitefluor® compounds (styril-bis-benzoxazoles) from Sumitomo Chemical Co., such as Whitefluor® B, Whitefluor® PEN, Whitefluor® PHR, Whitefluor® HCS, Whitefluor® PCS.

Specific examples of commercially available methyl-coumarin fluorescing dyes are Eccowhite® compounds from Eastern Color & Chemical Co., such as Eccowhite 1132 MOD, Eccowhite 2013, Eccowhite 2790, Eccowhite 5261, Eccowhite AEA-HF, Eccowhite Nylon FW, Eccowhite OP, Eccowhite PSO, Eccowhite DM-04 MOD.

Another useful category of fluorescing dyes is the Tinopal® family from BASF, which comprises both bis-benzoxazole and bis-(styril)biphenyl compounds, such as Tinopal ABP-A, Tinopal ABP-X, Tinopal ASP, Tinopal BPO, TinopalEC, Tinopal HST, Tinopal HW, Tinopal MSP, Tinopal NP, Tinopal SPP-N, Tinopal SPP-Z, Tinopal UP HC DD, Tinopal UP, Tinopal CBS-X, and Tinopal® OB.

Other useful fluorescing dyes that may be used in the present invention are described in Fluorescent Whitening agents, Anders G. EQS, Environmental quality and safety (Suppl. Vol IV) Georg Thieme, Stuttgart 1975.

The most preferred fluorescing dyes are:

- 4,4'-bis(2-benzoxazolyl)stilbene, marketed by Eastman Chemical under the trade name Eastobrite® OB-1, having the following structure:

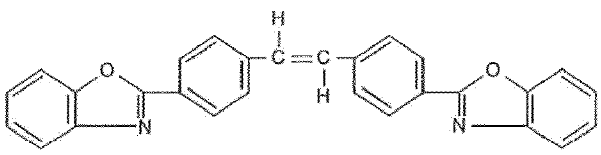

,

- 4,4'-bis(5-methyl-2-benzoxazolyl)stilbene, marketed by Eastman Chemical under the trade name Eastobrite® OB-4, having the following structure:

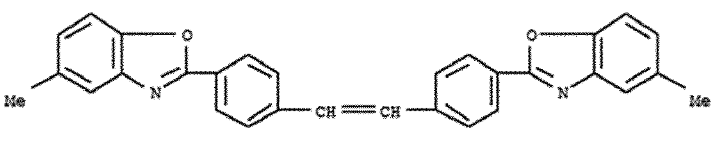

,

- 2,5-thiophenediylbis(5-tert-butyl-1,3-benzoxazole), marketed by BASF under the tradename Tinopal® OB, having the following structure:

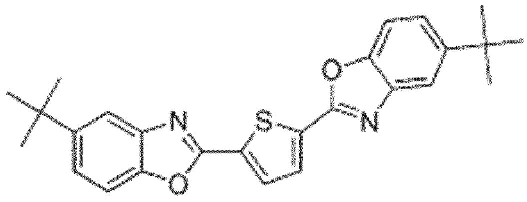

The most preferred fluorescing dye is Eastobrite® OB-4 (preferably used with Tinuvin 326 as the UV absorber), which exhibits ideal spectral characteristics, including absorption in the UV range, and interesting injection processability properties. Indeed, this compound does not absorb, or very little, in regions of the visible spectrum outside the 400-500 nm or 400-460 nm wavelength range.

Several UV absorbers and/or several fluorescing dyes can be incorporated into the substrate and/or the same or different layers deposited at the surface of the substrate.

Generally, blocking visible wavelengths such as undesirable blue light affects color balance, color vision if one looks through the optical device, and the color in which the optical device is perceived. Indeed, light-blocking optical devices incorporating at least one of the above described absorptive optical filtering means that at least partially inhibits visible light tend to produce a color tint in the optical article as a "side effect", the latter appearing yellow, brown or amber in the case of blue light blocking in a wavelength ranging from 400 to 460 nm. This is aesthetically unacceptable for many optical applications, and may interfere with the normal color perception of the user if the device is an ophthalmic lens.

In order to compensate for an effect such as the yellowing effect of the blue light blocking fluorescing dye and/or UV absorber, the optical article preferably comprises at least one color balancing agent, having preferably an absorption peak at a wavelength higher than or equal to 500 nm.

Obviously, the optical article according to the invention can only appear colorless if neither of its substrate and coatings is tinted.

In one embodiment, the color-balancing component employed to at least partially offset the yellowing effect and restore the original colorless appearance is a dye, or a mixture of dyes used in suitable proportions, such as a combination of red and green tinting dyes.

Examples of suitable fixed-tint colorants usable as color balancing dyes can include any of the art recognized inorganic and organic pigments and/or dyes. Organic dyes can be selected from azo dyes, polymethyne dyes, arylmethyne dyes, polyene dyes, pyrazolone dyes, anthraquinone dyes (also called anthracenediones), quinophtalone dyes and carbonyl dyes. Specific examples of such organic dyes include Blue 6G, Violet PF and Magenta RB available from Keystone Aniline, Morplas Blue from Morton International, Inc., D&C Violet #2 available from Sensient Corp., Macrolex Violet 3R from Lanxess, and Rubine Red from Clariant Corporation. Also suitable are laser dyes, for example those selected from pyrromethene, fluoroscein, rhodamine, malachit green, oxazine, pyridine, carbazine, carbocyanine iodide, and others. Specific examples include ABS 574, ABS 668 or ABS 674 from Exiton, Inc.; or SDA2443, SDA3572 or ADA4863 available from H. W. Sands Corp. Mixtures of any of the aforementioned dyes can be used.

Preferably, the color balancing agent used to minimize, and preferably eliminate, the change in color perception that results from blue-blocking has an absorption peak at a wavelength higher than or equal to 520 nm. For instance, an anthraquinone is suitable as color balancing dye according to the invention.

The color of a blue cutting optical device presents two problems. One being the color vision of the wearers as they look through the optical device, and the second being the appearance of the optical device seen by an observer. The physiology of the human vision system has the ability for chromatic adaptation. The brain can adjust for changes in illumination to preserve the color appearance of objects. For example, when a wearer initially puts on an optical device absorbing mostly blue light, a white object might at first look yellow but within seconds, the white object will again look white. For this reason, addition of a dye or dyes with maximum absorption between 570 nm to 600 nm (yellow part of the spectrum) is sufficient to offset the yellowing effect of blue cutting dyes to minimize any yellowing that a wearer may see when initially putting on the optical device. For example, because of chromatic adaptation, a wearer's color vision may not be able to distinguish the difference between an optical device that has a yellowness index (YI) of 5 or 7 from one with a YI of 1 or 3. This provides some amount of flexibility to solve the first problem and improve the color vision of the wearer so long as excessive color balancing dyes are not needed to reduce the YI within appropriate levels thereby diminishing the transmission through of the lens (%Tv).

The second problem to improve the appearance of the optical device presents more challenges and is critical for eyewear because of fashion. An observer can view the optical device from many different angles. Viewing angles can range from straight on at the face or at the side of the optical device. The viewing angle on the side can represent very thick light ray paths through the optical device as light travels from one edge's side to the opposing edge's side, while angles normal to the face of the optical device represent smaller light ray paths as light travels from one face to the opposing face. For example, an ophthalmic lens comes in many different geometries. Semi-finished lens blanks may

be up to 80 mm in diameter and up to 15 mm thick. Finished lenses may range in diameter from 40 mm to 70 mm with thicknesses from 1 mm or 6 mm. The optical path through the lens substrate for an observer when viewed at an almost infinite number of viewing angles can range from 1 mm to 80 mm. The formulation of color balancing dyes must account for all light ray paths through the optical device (thicker, such as lens edge, or thinner, such as lens face) to minimize the residual color. For a blue cutting optical device, the edge and face appearance may look yellow even though the color vision may not be perceived as yellow because of the aforementioned color adaptation of the human vision system. Therefore, in general, a dye or mixture of dyes with maximum absorption between 570 nm to 600 nm will neutralize the yellow edge and face color and there can be an optimal concentration of color balancing dyes to provide a grey edge. Additional amounts of color balancing dyes increased beyond the optimal concentration will cause the edge to appear too blue or violet; and concentrations lower than the optimal concentration will cause the edge to appear yellowish.

It has been discovered that using typical color balancing dye formulations with maximum absorption from 570 nm to 600 nm to neutralize the color of sharp cutting UV absorbers or fluorescing dyes can give an edge color that appears too blue or violet. Therefore, the face of the lens is at more of a risk to appear yellow because less color balancing dyes are needed to neutralize the edge color. Vice versa, the edge is at risk of appearing too blue or violet if instead it is desired to more neutralize the color on face. Incorporation of a color balancing dye or dyes with significant absorption (optical density) spread across from 460 nm to 650 nm, as opposed to only 570 nm to 600 nm, is effective to solve this problem of neutralizing the residual color of optical devices that utilize sharp cutting UV absorbers or fluorescing dyes. This is achieved because the broadened optical density of the combined color balancing mix reduces the overall transmission of the edge without significant reduction in transmission of the face. A reduction of the edge's transmission at a given value of chroma reduces the colorfulness of the edge. For example, a blue object appears more blue in the bright light than it does in the shade even though said object has the same value of chroma. Following this same principle, at a constant value of chroma, a lens edge with less transmission will appear more neutral in color than a lens edge with higher transmission.

In one embodiment, the transparent optical article further comprises at least one color balancing dye selected from (4E)-5-methyl-4-[(3-methyl-5-oxo-1-phenyl-4H-pyrazol-4-yl)methylidene]-2-phenylpyrazol-3-one, 12H-isoindolo[2,1-a]perimidin-12-one, 1-[(1-methylethyl)amino]anthraquinone, 1-(methylamino)anthraquinone, 3H-Dibenz[f,ij]isoquinoline-2,7-dione, 3-methyl-6-[(4-methylphenyl)amino], C.I. Solvent Violet 36, C.I. Solvent Blue 138, 1,4-diamino-2,3-dichloro-9,10-anthraquinone, 10-anthracenedione, 1-hydroxy-4-(4-methylphenyl)amino-9, 1,4-bis[(2,4,6-trimethylphenyl)amino]-9,10-anthracenedione and 1,4-bis(4-methylanilino)anthracene-9,10-dione.

In the preferred embodiment of the invention, the optional color balancing agent for balancing the color imparted by the UV absorber and/or the fluorescing dye is incorporated into the thermoplastic substrate together with the UV absorber and the fluorescing dye.

If the fluorescing dye is incorporated into the substrate, said substrate preferably comprises at least one UV absorber. Indeed, the UV absorber, when present in the lens substrate, efficiently suppresses the ability of the fluorescing dye to emit light by fluorescence at a wavelength ranging from 400 to 460 nm. Without wishing to be bound by any theory, the inventors believe that this is due to the fact that UV light is absorbed by the UV absorber and can no longer trigger the fluorescence emission of the fluorescing dye. The presence of an "interfering" UV absorber in the close environment of the fluorescing dye more efficiently prevents the ability of the fluorescing dye to emit light by fluorescence. Therefore, it is preferred to incorporate both the UV absorber and the fluorescing dye in the same layer of substrate, preferably both in the substrate, so that the UV absorber can better reduce the fluorescence of the fluorescing dye. Fluorescence of the fluorescing dye could indeed cause cosmetic (appeareance) problems of the final optical article, such as an excessively bright blue color.

Accordingly, UV absorbers with a higher extinction coefficient in the UV-blue light region (350-400 nm) are more effective to reduce the fluorescence emission of the fluorescing dye and thereby require less amounts of UV absorber and provide a higher slope at the inflection point for the transmission curve.

However, a part of the UV absorber can be incorporated into the substrate, and another part thereof can be incorporated into a layer coated on the substrate.

The fluorescing dye and/or the UV absorber and/or the optional color balancing agent can be incorporated into the substrate by methods well known in the art, preferably by mixing these components in the thermoplastic substrate composition.

For example, by taking the example of incorporation of a dye (similar methods can be used for the fluorescing dye and the UV absorber), the following methods can be used:

I. impregnation or imbibition methods consisting in dipping the substrate in an organic solvent and/or water based hot coloration bath, preferably a water based solution, for several minutes. Substrates such as organic lens substrates are most often colored in the bulk of the material by dipping in aqueous coloration baths, heated to temperatures of the order of 90°C, and in which the dye has been dispersed. The dye thus diffuses under the surface of the substrate and the color density is obtained by adjusting the quantity of dye diffusing in the body of the substrate,

II. the diffusion methods described in JP 2000-314088 and JP 2000-241601, involving an impregnable temporary coating,
III. contactless coloration using a sublimable material, such as described in US 6534443 and US 6554873, or
IV. incorporation of a dye during the manufacture of the substrate itself, for example by casting or injection molding, if the dye is sufficiently resistant to high temperatures present during casting or injection molding.

When the UV absorber is incorporated into a layer deposited on the substrate, said layer is called layer L1.
The color balancing agent can be incorporated, without limitation, into the thermoplastic substrate and/or into said at least one layer L1 and/or into at least one layer L2 coated on the thermoplastic substrate that is different from layer L1. These layers are not necessarily deposited on the same face of the transparent optical article. They can be deposited on either face of the transparent optical article (which may be convex, concave or flat), or on both faces of the transparent optical article. When the UV absorber is present in said layer L1 and the color balancing dye is present in a layer L2, both layers are preferably coated on the same main surface of the substrate.
In an embodiment, the transparent optical article comprises at least one layer L2 (containing at least one color balancing dye) that is coated on the substrate. When layer L1 is present (containing at least one UV absorber), it is preferably fused or directly bonded (generally adhesively) to the substrate (i.e., in direct contact with the substrate). In the context of the present invention, "directly" means that there is a direct contact between the materials and a layer that is fused to a substrate is still considered as being coated on the substrate.
These layers L1 and/or L2 (when present) containing at least one essential component of the present invention can be applied onto the substrate of the optical article as preformed films or molded wafers that will be subsequently transferred, laminated, fused or glued to the substrate. They may also constitute or be part of, without limitation, a primer coating, a hard coating or an antireflection coating, which will be described later.
Layer L1 preferably has a thickness lower than or equal to 2 mm, more preferably lower than or equal to 1 mm, even better ranging from 100 to 500 μm. When present, layer L2 preferably has a thickness lower than or equal to 2 mm, more preferably lower than or equal to 1 mm, even better ranging from 100 to 500 μm.
Several methods familiar to those practiced in the art of optical manufacturing are known for incorporating the dye (and/or the fluorescing dye or UV absorber) in a layer L1 and/or L2 (or in a preformed film, herein called "wafer"). The dye may be deposited at the same time as the layer, i.e., when the layer is prepared from a liquid coating composition, the dye can be incorporated (directly or for example as dye-impregnated particles) or dissolved in said coating composition before it is applied (in situ mixing) and hardened at the surface of the substrate.
The dye (and/or the fluorescing dye or UV absorber) may also be included in a coating in a separate process or sub-process. For example, the dye may be included in the coating after its deposition at the surface of the substrate, using a dipping coloration method similar to that referred to for coloring the substrate, i.e., by means of tinting bath at elevated temperatures, through the diffusion method disclosed in US 2003/0020869, in the name of the applicant, through the method disclosed in US 2008/127432, in the name of the applicant, which uses a printing primer that undergoes printing using an inkjet printer, through the method disclosed in US 2013/244045, in the name of the applicant, which involves printing with a sublimation dye by means of a thermal transfer printer, or through the method disclosed in US 2009/047424, in the name of the applicant, which uses a porous layer to transfer a coloring agent in the substrate. The dye may also be sprayed onto a surface before the coating is cured (e.g., thermally or UV cured), dried or applied.
Other methods for incorporating dyes, UV absorbers, and/or fluorescing dyes into layers, such as ink jet printing, post-injection press lamination process, film insert molding.
The amount of color balancing dye(s) used in the present invention is an amount sufficient to offset the yellowing effect caused by the optical filtering means and provide a transparent optical article that does not have a yellow appearance, the amount of UV absorber used in the present invention is an amount sufficient to provide a satisfactory protection from UV light, while the amount of fluorescing dye used in the present invention is an amount sufficient to provide a satisfactory protection from blue light.
The amount of fluorescing dye incorporated into a layer coated on (or fused to) the thermoplastic substrate or into the substrate preferably ranges from 1 ppm to 10000 ppm, more preferably from 20 ppm to 500 ppm relative to the weight of said thermoplastic substrate or said layer, even preferably from 20 to 200 ppm.
The amount of UV absorber incorporated into a layer coated on (or fused to) the thermoplastic substrate or into the substrate preferably ranges from 0.01 % to 5 %, more preferably from 0.1 % to 1 % relative to the weight of said thermoplastic substrate or said layer, even more preferably from 0.15 % to 0.8 %.
The amount of color balancing dye(s) incorporated into a layer coated on (or fused to) the thermoplastic substrate or into the substrate preferably ranges from 0.1 ppm to 2 or 3 ppm relative to the weight of said thermoplastic substrate or said layer, more preferably from 0.5 ppm to 1.5 ppm.
Naturally, the respective amounts of fluorescing dye, color balancing dye and UV absorber have to be adapted to each other to produce a transparent, colorless element. In particular, those of skill in the art should appreciate that the desired amount of color balancing dye will vary depending on several factors including the nature and amount of the

other essential components of the invention, the strength of the dye, the final color and % of transmission desired.

In some applications, it is preferred that the substrate's main surface is coated with one or more functional coating(s) to improve the optical and/or mechanical properties. The term "coating" is understood to mean any layer, layer stack or film which may be in contact with the substrate and/or with another coating, for example a sol-gel coating or a coating made of an organic resin. A coating may be deposited or formed through various methods, including wet processing, gaseous processing, and film transfer. These functional coatings classically used in optics may be, without limitation, an impact-resistant and/or adhesion primer, an abrasion-resistant and/or scratch-resistant coating, an anti-reflection coating, a polarized coating, a photochromic coating, or an antistatic coating, or a stack made of two or more such coatings, especially an impact-resistant primer coating coated with an abrasion and/or scratch-resistant coating.

Abrasion- and/or scratch-resistant coatings (hard coatings) are preferably hard coatings based on poly(meth)acrylates or silanes. Recommended hard abrasion- and/or scratch-resistant coatings in the present invention include coatings obtained from silane hydrolyzate-based compositions (sol-gel process), in particular epoxysilane hydrolyzate-based compositions such as those described in the US patent application US 2003/0165698 and in US 4,211,823.

The primer coatings improving the impact resistance and/or the adhesion of the further layers in the end product are preferably polyurethane latexes or acrylic latexes. Primer coatings and abrasion-resistant and/or scratch-resistant coatings may be selected from those described in the application WO 2007/088312. The primer coating generally promotes adhesion of the hard coating to the substrate.

The antireflection coating, which improves the antireflective properties of the final optical article by reducing the light reflection at the article-air interface over a relatively large range of the visible spectrum, may be any antireflection coating classically used in the optics field, in particular in ophthalmic optics. As is well known, antireflective coatings traditionally comprise a monolayered or a multilayered stack composed of dielectric or sol-gel materials. These are preferably multilayered coatings, comprising layers with a high refractive index (HI, $n > 1.5$) and layers with a low refractive index (LI, $n \leq 1.5$).

The structure and preparation of antireflection coatings are described in more details in patent application WO 2010/109154 and WO 2012/153072.

Coatings such as primers, hard coats and antireflection coatings according to the invention may be deposited using methods known in the art, including spin-coating, dip-coating, spray-coating, evaporation, sputtering, chemical vapor deposition and lamination.

The transparent optical article according to the invention preferably has an average light transmission factor from 415 nm to 444 nm lower than or equal to 80 %, more preferably lower than or equal to 77 % or 75 %. In a preferred embodiment, the above conditions are satisfied by the optical article even when provided with an antireflection coating.

In one embodiment, the transparent optical article has an average light transmission factor from 445 nm to 504 nm higher than or equal to 80 %. In another embodiment, the transparent optical article has an average light transmission factor from 445 nm to 474 nm higher than or equal to 80 %. In another embodiment, the transparent optical article has an average light transmission factor from 475 nm to 504 nm higher than or equal to 80 %. In another embodiment, the transparent optical article has an average light transmission factor from 385 nm to 414 nm lower than or equal to 75 %.

The levels of light transmission mentioned in the present application can be controlled by adjusting the concentration of fluorescing dye and/or UV absorber. Further, both the absorption range and amount of UV absorber and fluorescing dye should be managed to achieve the targeted UV and blue light cut.

In one embodiment, the optical article according to the invention has a relative light transmission factor in the visible spectrum Tv is higher than or equal to any one of the following values: 80%, 85 %, 86 %, 87 %, 88 %, 89 %, 90 %, 92 %, 95 %, 96 %, 97 %, 98 %. Said Tv factor preferably ranges from 87 % to 98.5 %, more preferably from 87 % to 97 %, even better from 87 % to 96 %. In another embodiment, Tv ranges from 89 % to 98 %, preferably from 90 % to 98 %, better 95 % to 97 %. In a preferred embodiment, the above conditions are satisfied by the substrate of the optical article, or the optical article without any antireflection coating deposited thereon.

The Tv factor, also called "luminous transmission" of the system, is such as defined in ISO standard 13666:1998 and is measured accordingly to standard ISO 8980-3. It is defined as the average in the 380-780 nm wavelength range that is weighted according to the sensitivity of the eye at each wavelength of the range and measured under D65 illumination conditions (daylight).

In the present description, unless otherwise specified, transmittances/transmissions are measured at the center of the optical article for a thickness of 2 mm, at an angle of incidence ranging from 0° to 15°, preferably 0°, and are non-weighted transmissions.

The transparent optical article according to the invention has a spectral transmission curve with a light cut-off wavelength higher than or equal to 400 nm, preferably higher than or equal to 405, 406, 407, 408, 408 or 410 nm.

In the present disclosure, the light cut-off wavelength is defined as the wavelength below which light transmission becomes lower than 1 %. In other words, it is the highest wavelength for which the transmittance is lower than 1 %, and below this wavelength, at least 99 % of each light wavelength is blocked.

As an essential characteristic of the invention, the spectral transmission curve of the transparent optical article has an inflection point at a wavelength ranging from 400 to 450 nm, preferable from 410 to 430 nm, and the slope at said inflection point is higher than or equal to 6 %/nm, preferably higher than or equal to 7 %/nm or 8 %/nm. A steeper slope generally corresponds to a higher blue-cut efficiency because less visible blue light is absorbed relative to the absorption of higher energy violet light.

As well known, an inflection point on a smooth plane curve is a point at which the curvature changes sign. In the present spectral transmission curve, it is a rising point of inflection, i.e., an inflection point near which the transmission function is increasing.

In another embodiment, the value of the transmission increases in the range 400-430 nm at an average rate higher than or equal to 6, 7 or 8 %/nm. In another embodiment, the variation of the transmission is preferably monotonously increasing in the 400-450 nm or 400-430 nm wavelength range.

As the alternative to the article described above, the invention also relates to a transparent optical article comprising a thermoplastic substrate, at least one UV absorber and at least one fluorescing dye at least partially inhibiting transmission of light having a wavelength ranging from 400 to 500 nm, and the spectral transmission curve of said transparent optical article has a slope at 420 nm higher than or equal to 6 %/nm and a light cut-off wavelength higher than or equal to 400 nm.

As the alternative to the article described above, the invention also relates to a transparent optical article comprising a thermoplastic substrate, at least one UV absorber and at least one fluorescing dye at least partially inhibiting transmission of light having a wavelength ranging from 400 to 500 nm, and the spectral transmission curve of said transparent optical article has a light cut-off wavelength higher than or equal to 400 nm and is such that the slope at the wavelength corresponding to the half maximum transmission is higher than or equal to 6 %/nm.

All the embodiments previously described in the present disclosure equally apply to both alternative transparent optical articles described hereinabove.

The spectral transmission curve mentioned herein is preferably defined in the range 340-780 nm.

The following examples illustrate the present invention in a more detailed, but nonlimiting manner. Unless stated otherwise, all thicknesses disclosed in the present application relate to physical thicknesses. The percentages given in the tables are weight percentages. Unless otherwise specified, the refractive indexes referred to in the present invention are expressed at 20-25°C for a wavelength of 550 nm.

## Examples

### I. Preparation of the lenses

The polycarbonate resin used for preparing the lenses was Iupilon CLV1000 sold by Mitsubishi Engineering-Plastics Corp. The commercial polycarbonate resin formulation contains an amount of a basic UV absorber imparting a low cut-off wavelength (388 nm) and some color balancing dyes.

Tinuvin® 326 (2-(2'-hydroxy-3'-tert-butyl-5'-methylphenyl)-5-chlorobenzortriazole) from BASF was used as UV absorber, while Eastobrite® OB-4 (4,4'-bis(5-methyl-2-benzoxazolyl)stilbene) from BASF was used as fluorescing dye.

The following extra color balancing dyes were employed (extra means that these color balancing dyes were added in addition to those already present in the commercial polycarbonate resin formulation). The Full-Width-Half-Maximum (FWHM) ranges when combined for all three color balancing dyes show that most of the desired light attenuation for the purposes of color balancing occurs between the wavelengths of 410 to 653 nm.

Color balancing dyes

| | Chemical name | $\lambda_{MAX}$ | FWHM |
|---|---|---|---|
| Solvent Violet 31 | 1,4-diamino-2,3-dichloro-9,10-anthraquinone | 554 nm | 105 nm (509 - 613 nm) |
| Solvent Blue 104 | 1,4-bis[(2,4,6-trimethylphenyl)amino]-9,10-anthracenedione, | 630 nm | 100 nm (553 - 653 nm) |
| Solvent Orange 60 | 12H-phthaloperin-12-one (12H-isoindolo[2,1-a]perimidin-12-one) | 456 nm | 101 nm (410 - 511 nm) |

The lenses were prepared by mixing the UV absorber, fluorescing dye and optional color balancing dyes with the polycarbonate resin Iupilon CLV1000 produced by Mitsubishi Engineering-Plastics Corp. The formulations were then injection molded to produce piano lenses in a single step (76 mm diameter, 2 mm center thickness, with base curve 6)

according to conditions well known by the skilled artisan using a Boy 22D injection molding machine. The Iupilon CLV1000 resin is a standard ophthalmic polycarbonate including a UV absorber.

**II. Testing methods**

The uncoated piano lenses for each example were observed for aesthetics by judging perception through the lens of color and contrast. The color perception through the lens was judged by an observer against a white background. The contrast perception through the lens was judged by an observer by holding the lens up to the eye and observing the sharpness of an image in the background. The edge of the lens was judged for color appearance.

The observations were made using indoor and outdoor viewing conditions. The indoor lighting condition used a fluorescent bulb with a 4000 K color temperature. The outdoor lighting condition was natural sunlight on a bright sunny day.

Aesthetics Ranking Key

| | 0 | + | - |
|---|---|---|---|
| **Color perception** | C1 reference | + slightly more yellow than reference + + slightly more yellow than + | N/A |
| **Contrast perception** | C1 reference | NA | - slight reduction in contrast - - slightly more reduction in contrast over - - - - slightly more reduction in contrast over - - |
| **Edge color appearance** | C1 reference (grey) | + yellow | - slightly bluish - - more bluish than - |

Transmission curves were recorded on a Cary 60 spectrophotometer from Agilent in intervals of 1nm and the reflection curves were recorded on an UltraScan PRO from HunterLab in intervals of 5nm. The Cary 60 measurements provide transmission data with no influence from UV and do not detect the emission caused by the fluorescence of the fluorescing dye. The measurements made with the HunterLab spectrophotometer were obtained in reflection mode with UV source turned on to capture any fluorescent emissions. This is done in accordance to ASTM E1247 to detect fluorescence emissions.

The measurements were used to calculate the slope at inflection point and amount of fluorescence for the examples in table 1. As figure 7 illustrates, the slope as a function of λ (slope(λ)) is calculated from the transmission data as the slope of linear regression from λ-2nm to λ+2nm. The inflection point is the λ where slope is at a maximum. The slope tabulated in table 1 is the slope at inflection point.

The equations below are derived to calculate the fluorescence emission from the measurements. The calculated values of fluorescence are tabulated in table 1 for each of the examples. The detected light coming from the lens in the Hunter UltraScan PRO reflection mode with UV turned on and using a black background has 3 components: (1) light reflected from the lens surfaces, (2) light reflected from the background, (3) light emitted from fluorescence. This is shown in Equation 1.

Equation 1 $$R_H(\lambda) = [R_T(\lambda)] + [F\,(\lambda)] + [R_{FB}(\lambda)]$$

Where:

- $R_H(\lambda)$ is the fraction of light detected by Hunter UltraScan PRO in reflection mode with UV turned on and using a black background with the lens in place. Shown in figure 1a
- $R_T(\lambda)$ is the fraction of light that is from the total surface reflection of a lens
- $F(\lambda)$ is the fraction of light that is from the total fluorescence emission of a lens containing a fluorescing dye
- $R_{FB}(\lambda)$ is the fraction of light being reflected off the black background after it transmits through the lens

$R_{FB}(\lambda)$ was obtained with the lens total transmission data and the light detected by the Hunter UltraScan PRO with no lens sample. Equation 2 shows that light travels from the source, through the lens, reflects off the black background and through the lens again on its way to the detector.

$$\text{Equation 2} \qquad R_{FB}(\lambda) = T_T^{\ 2}(\lambda) \times R_B(\lambda)$$

Where:

$T_T(\lambda)$ is the fraction of transmitted light detected by Cary 60 with the lens in place
$R_B(\lambda)$ is the fraction of light detected by the Hunter UltraScan PRO in reflection mode with UV turned on and using a black background but with no lens in place

The total surface reflection term ($R_T(\lambda)$) is reflections from the front and back surfaces of the lens. The total reflection will not be the same for each lens example because light reflecting off the back lens surface is absorbed by the lens before being transmitted to the detector. Therefore, a lens made from the same thermoplastic resin will have less total reflection as more dye is added to increase the total absorbance. However, the percent reflection from each surface will be the same. Equation 3 is derived from a total transmission measurement to show that light from the source is partially reflected off the front convex lens surface, absorbed by the lens material and partially reflected off the back concave lens surface before entering the detector. In addition, Equation 4 relates the total transmission to total reflection and light absorbed by the lens material.

$$\text{Equation 3} \qquad T_T(\lambda) = [1 - R_{CX}(\lambda)] \times T_S(\lambda) - R_{CC}(\lambda)$$

$$\text{Equation 4} \qquad T_T(\lambda) = T_S(\lambda) - R_T(\lambda)$$

Where:

$T_S(\lambda)$ is the fraction of light transmitted through the lens material (not including surface reflection)
$R_{CX}(\lambda)$ is the fraction of light reflected off the front convex lens surface
$R_{CC}(t)$ is the fraction of light reflected off the back concave lens surface

$R_{CX}(\lambda)$ and $R_{CC}(\lambda)$ are first assumed to be equal (denoted simply as $R_S(\lambda)$). Next, equation 3 is solved for $T_S(\lambda)$ and this expression is substituted into equation 4 and solved for $R_T(\lambda)$ which is shown for equation 5.

$$\text{Equation 5:} \qquad R_T(\lambda) = \frac{T_T(\lambda) + R_S(\lambda)}{1 - R_s(\lambda)} - T_T(\lambda)$$

Finally Equation 6 can be derived by substituting $R_T(\lambda)$ equation 5 and $R_{FB}(\lambda)$ equation 2 expressions into equation 1 and solving for $F(\lambda)$

$$\text{Equation 6:} \qquad F(\lambda) = T_T(\lambda) - \frac{T_T(\lambda) + R_S(\lambda)}{1 - R_S(\lambda)} - T_T^{\ 2}(\lambda) \times R_B(\lambda) + R_H(\lambda)$$

Every term in equation 6 is known from measurements except $R_S(\lambda)$. This surface reflection term can be calculated from the control lens measurements and assumed to be the same for all lens examples of table 1 because they are all formulated from the same thermoplastic resin as the control. The control is the lens made from the same thermoplastic resin and without additional amounts of dyes. Example C1 is the control lens in table 1. The control lens does not have any fluorescence and the $F(\lambda)$ term of equation 6 can be set to zero. Next equation 6 is rearranged and solved for $R_S(\lambda)$. The results for $R_S(\lambda)$ are shown in figure 6. Equation 6 is now free to be solved for the fraction of fluorescence using the calculated value for $R_S(\lambda)$ and direct measurements. The calculated $F(\lambda)$ values from 390 to 750 nm are shown in figure 1b and tabulated in table 1 in intervals of 5nm as an average between the wavelength region of interest (415 to 445 nm), *i.e.*, sum of the F values from 415 to 445 divided by 7.

Comparison with a comparative control commercial sample, thermoplastic substrate only with no dyes, in Figure 1a shows that the fluorescing dye OB-4 has a fluorescence peak between 400 and 500 nm.

## II. Results

The constitution of the prepared lenses and their optical performances are detailed in Table1. The comparative examples 1 to 7 are noted C1 to C7.

Table 1

| *Example* | | *C1* | *C2* | *C3* | *C5* | *1* | *C6* | *C7* | *2* | *3* | *C4* |
|---|---|---|---|---|---|---|---|---|---|---|---|
| *Formulation of the PC resin* | | | | | | | | | | | |
| Fluorescing dye | OB-4 (ppm) | 0 | 0 | 0 | 333 | 134 | 134 | 0 | 62 | 48 | 0 |
| Added UV absorber | Tinuvin 326 (%) | 0 | 0.40 | 0.71 | 0 | 0.33 | 0 | 0.33 | 0.52 | 0.64 | 0.64 |
| Extra Color Balancing Dyes | SO60 (ppm) | 0 | 0.26 | 0 | 0 | 0 | 0 | 0 | 0 | 0.25 | 0.25 |
| | SV31 (ppm) | 0 | 0.45 | 0.8 | 0 | 0 | 0 | 0 | 0 | 0.52 | 0.52 |
| | SB104 (ppm) | 0 | 0.49 | 0.4 | 0 | 0 | 0 | 0 | 0 | 0.37 | 0.37 |
| Cut-off wavelength (nm) | | 388 | 405 | 409 | 413 | 411 | 408 | 404 | 409 | 410 | 408 |
| Tv (%) | | 89.5 | 88.2 | 87 | 89.5 | 89.4 | 89.5 | 89.4 | 89.4 | 88.2 | 88.2 |
| Average % transmission 415-444 nm | | ***88*** | 76 | 69 | 70 | 71 | 78 | 78 | 71 | 69 | 71 |
| Average % transmission 415-444 nm (lens with hard coat and antireflection coating) | | ***96*** | ***83*** | 76 | 77 | 78 | ***85*** | ***85*** | 78 | 76 | 78 |
| Slope of the transmission curve at inflection point (%/nm) | | | ***5.7*** | ***5.8*** | 9.7 | 8.1 | 9.1 | 5.6 | 6.9 | 6.5 | 5.8 |
| Average fluorescence % in the range 415-445 nm | | 0% | 0% | 0% | 2.9% | 1.3% | 2.3% | 0% | 0.5% | 0.3% | 0% |
| ***Edge color appearance indoor*** | | 0 | 0 | 0 | - | 0 | - | ++ | + | 0 | + |
| ***Perception through the lens*** | | | | | | | | | | | |
| Indoor | Color | 0 | + | + | + | + | + | ++ | ++ | + | ++ |
| | Contrast | 0 | 0 | 0 | - | 0 | - | 0 | 0 | 0 | 0 |
| Outdoor | Color | 0 | + | + | 0 | + | 0 | ++ | + | + | ++ |
| | Contrast | 0 | 0 | 0 | - | - | - | 0 | 0 | 0 | 0 |
| SV31: Solvent Violet 31. SB104: Solvent Blue 104. SO60: Solvent Orange 60. | | | | | | | | | | | |

Comparative example C1 is a reference lens without the fluorescing dye and without additional UV absorber. It has a satisfactory UV blocking ability due to the presence of a UV absorber already present in the commercial polycarbonate resin (UV cut-off: 388 nm), but very little high-energy visible light (such as blue light) cutting ability (see figure 2).

Comparative examples C2, C3 and C4 are lenses containing some amounts of color balancing dyes to neutralize the lens color, and an additional UV absorber, as compared to C1. Comparative examples C3 and C4 use a higher amount of Tinuvin® 326 than comparative example C2 to provide a lens having a higher blue light cutting function.

As shown by the exemplary data described above, a system according to the present invention selectively inhibits transmission of UV light and blue light, i.e., specifically reduces the light received by the eye in the 400 nm-460

nm region and inhibits wavelengths under 400 nm (see figure 3), while maintaining color cosmetics and appearance.

The cut-off wavelength, as defined by the wavelength below which light transmission is lower than 1 %, ranges from 409 to 411 nm for the lenses according to the invention, due to the combined use of of the fluorescing dye and UV absorber in the polycarbonate lens substrate, without the need to use color balancing dyes.

The lenses according to the invention, utilizing a fluorescing dye, have an average light transmission factor from 415 nm to 444 nm lower than or equal to 80 %, and thus comply with the CNIS (China national institute of standardization) requirements, even when factoring in normal production process variation that can impact this value. Examples 1 to 3 use increasing ratios of UV absorber to fluorescing dye to reduce the fluorescence emission, improve contrast and appearance of the optical device.

The nominal values of cut between the 415 nm to 444 nm zone for example 2 (78%) will pass CNIS specification for this zone, but are at risk of failing once normal lens transmission variations within this zone (for example, ±3%) typical to the eyewear manufacturing industry are factored in (such as dye concentration variation, antireflective coating thickness variations). Therefore, example 3 contains increased amounts of Tinuvin® 326 compared to example 2 (as opposed to increased amounts of OB-4) to ensure the nominal design would pass CNIS when standard production process variations are considered and the amount of fluorescence would be less.

A comparison of comparative example C1 with comparative example C5 shows that the addition of the fluorescing dye increases the cut-off wavelength from 388 to 413 nm. A comparison of comparative example C7 with example 1 shows that the addition of the fluorescing dye increases the cut-off wavelength from 404 to 411 nm in the presence of the added UV absorber (Tinuvin 326). A comparison of comparative example C1 with comparative example C7 shows that the addition of the UV absorber (Tinuvin 326) increases the cut-off wavelength from 388 to 404 nm.

The results indicate that the added UV absorber alone without a fluorescing dye (comparative example C3) causes the lens total transmission (%Tv) to become lower when optimally color balanced to maintain adequate yellowness. This lower transmission, when extrapolated to thicker sections of an ophthalmic lens, will start to give a darker tinted appearance.

The use of an fluorescing dye without added UV absorber (examples C5 and C6) causes the lens edge to appear unnaturally bright blue with poor contrast perception, especially when exposed to light with higher amounts of UV radiation. The blue color appearance may not be desirable for most customers from a fashion sense. The blue light cutting properties of C5 exceed those of C6 due to the fact that C5 has more than double the concentration of fluorescing dye.

Examples 1 and 2 show that by mixing a UV absorber and a fluorescing dye in appropriate ratios, a synergy is created by which color perception is maintained without sacrificing total transmission and contrast. Example 3 shows that by adding appropriate amounts of color balancing dyes, the final aesthetics of the lens can be further optimized for better color cosmetics and appearance. As compared to lenses using a fluorescing dye without a UV absorber (C5, C6) or lenses using a UV absorber without a fluorescing dye (C3, C4), the lenses of examples 1-3 with both components have the required blue light cutting function without diminishing the color cosmetics.

Interestingly, example 1 has improved contrast and edge color compared to C6 even though both have the same level of fluorescing dye.

When the abrasion- and scratch-resistant coating (hard coat) disclosed in example 3 of EP 0614957 and a commercial 4-layer antireflective coating $ZrO_2/SiO_2/ZrO_2/SiO_2$ deposited by evaporation under vacuum (layer thicknesses: 27, 21, 80 et 81 nm) is deposited onto the above lenses, their Tv is increased to 95-97 %.

The spectral data (figures 1a and 1b) confirms very little emission in the range 415-445 nm with the lenses according to the invention as compared to lenses without fluorescing dye (see examples 3 and C4), thereby ensuring that the wearer is not exposed to a high amount of high-energy visible light (including blue light) caused by fluorescence of the fluorescing dye.

## Claims

**1.** A transparent optical article comprising a thermoplastic substrate, at least one UV absorber and at least one fluorescing dye at least partially inhibiting transmission of light having a wavelength ranging from 400 to 500 nm,

wherein the spectral transmission curve of said transparent optical article has:

- an inflection point at a wavelength ranging from 400 to 450 nm, and the slope at said inflection point is higher than or equal to 6 %/nm,
- a light cut-off wavelength higher than or equal to 400 nm, preferably higher than or equal to 405 nm,

and wherein the transparent optical article has an average fluorescence as determined according to the standard

ASTM E1247 lower than or equal to 2 % in the range from 415 nm to 445 nm.

2. The transparent optical article according to claim 1, wherein said light cut-off is at a wavelength higher than or equal to 405 nm, and said slope at said inflection point is higher than or equal to 7 %/nm.

3. The transparent optical article according to any one of the preceding claims, wherein said fluorescing dye is incorporated into the thermoplastic substrate in an amount ranging from 20 ppm to 500 ppm relative to the weight of said thermoplastic substrate.

4. The transparent optical article according to any one of the preceding claims, wherein said UV absorber is incorporated into the thermoplastic substrate in an amount ranging from 0.1 % to 1 % relative to the weight of said thermoplastic substrate.

5. The transparent optical article according to any one of the preceding claims, further defined as having a light transmission factor in the visible spectrum Tv from 380 nm to 780 m that is higher than or equal to 85 %.

6. The transparent optical article according to any one of the preceding claims, wherein the transparent optical article further comprises at least one color balancing agent.

7. The transparent optical article according to any one of the preceding claims, wherein the transparent optical article further comprises at least one color balancing dye selected from 1,4-diamino-2,3-dichloro-9,10-anthraquinone, 1,4-bis[(2,4,6-trimethylphenyl)amino]-9,10-anthracenedione and 12H-isoindolo[2,1-a]perimidin-12-one.

8. The transparent optical article according to any one of the preceding claims, further defined as an ophthalmic lens.

9. The transparent optical article according to any one of the preceding claims, wherein the fluorescing dye is chosen from butadienes, stilbenes, carbostyrils, coumarins, porphyrins, pyrazolines, naphthalimides and benzoxazoles, preferably from bis-benzoxazoles, phenylcoumarins, methylcoumarins and bis-(styryl)biphenyls.

10. The transparent optical article according to any one of the preceding claims, wherein the UV absorber is chosen from benzophenones, benzotriazoles, triazines, benzoxaxinones, cinnamates and oxanilides, preferably from 2-hydroxybenzophenones and 2-(2-hydroxyphenyl)-benzotriazoles.

11. The transparent optical article according to any one of the preceding claims, wherein the fluorescing dye has a maximum fluorescence emission peak in the wavelength range from 400 to 500 nm.

12. The transparent optical article according to any one of the preceding claims, further defined as having an average light transmission factor from 415 nm to 444 nm lower than or equal to 80 %.

13. The transparent optical article according to any one of the preceding claims, further defined as having an average light transmission factor from 445 nm to 504 nm higher than or equal to 80 %.

14. The transparent optical article according to any one of the preceding claims, wherein the UV absorber is 2-(5-chloro-2H-benzotriazol-2-yl)-6-(1,1-dimethylethyl)-4-methylphenol and the fluorescing dye is 4,4'-bis(5-methyl-2-benzoxazolyl)stilbene.

15. The transparent optical article according to any one of the preceding claims, wherein said at least one fluorescing dye inhibits transmission of from 10 to 50 % of light having a wavelength ranging from 410 to 440 nm.

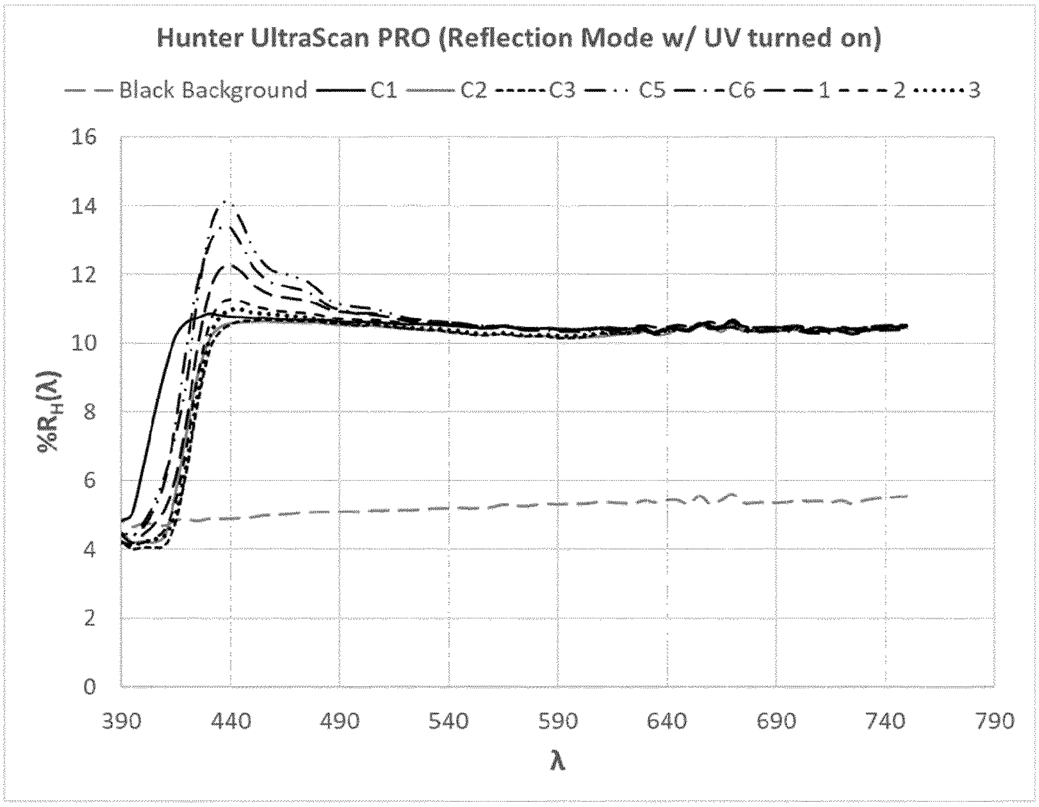


Figure 1a

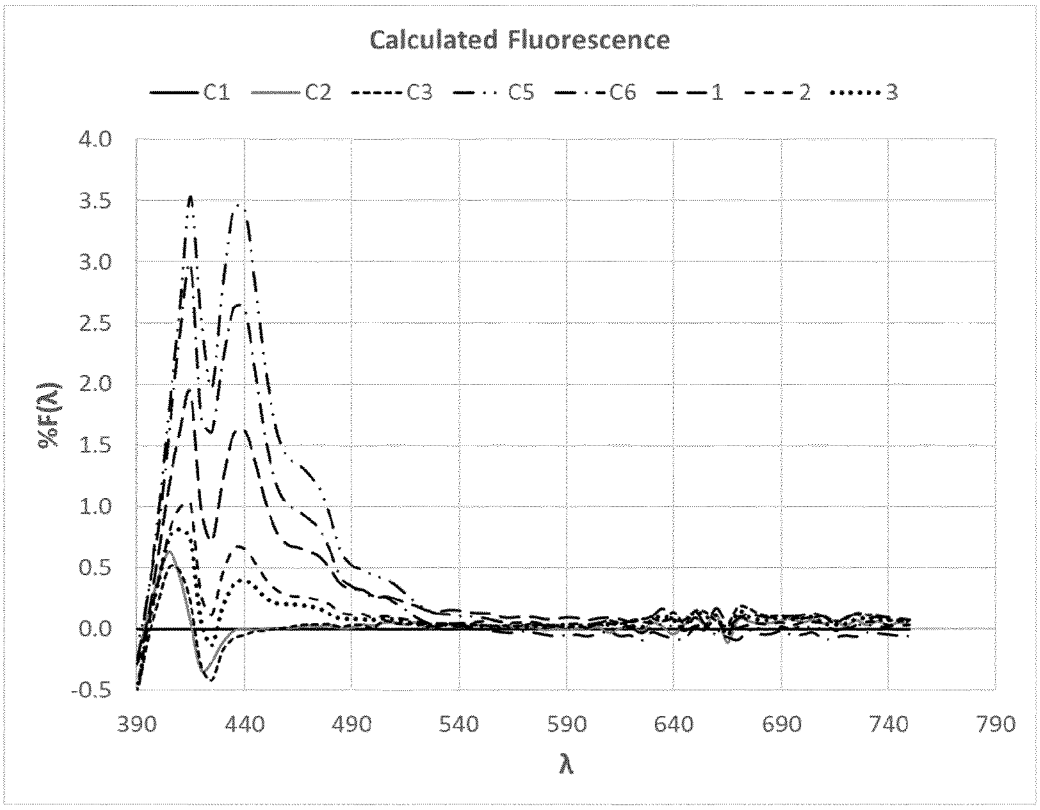


Figure 1b

Figure 2

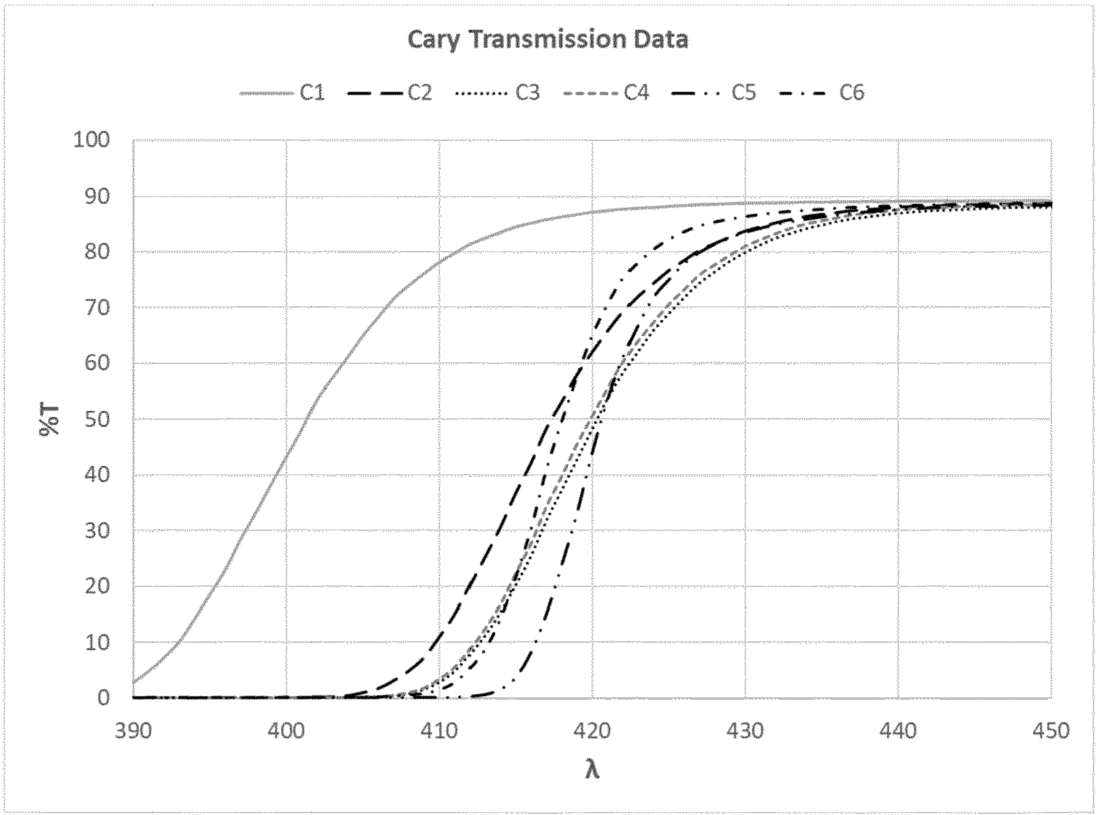


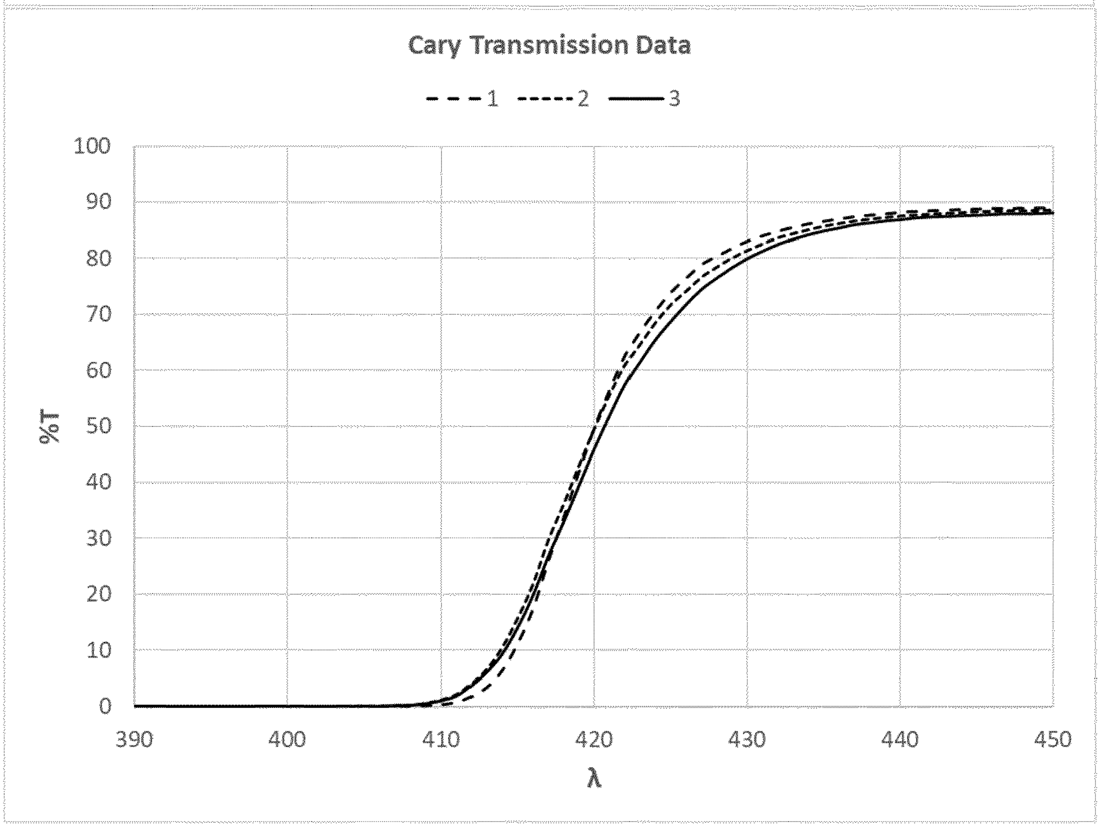


Figure 3

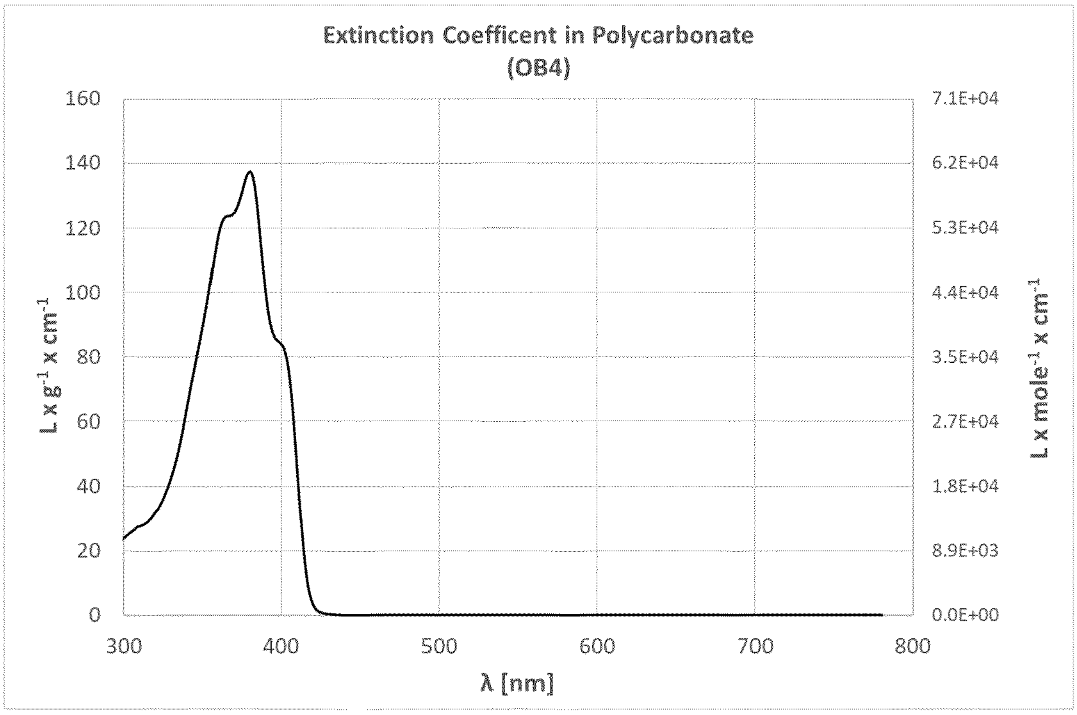


Figure 4a

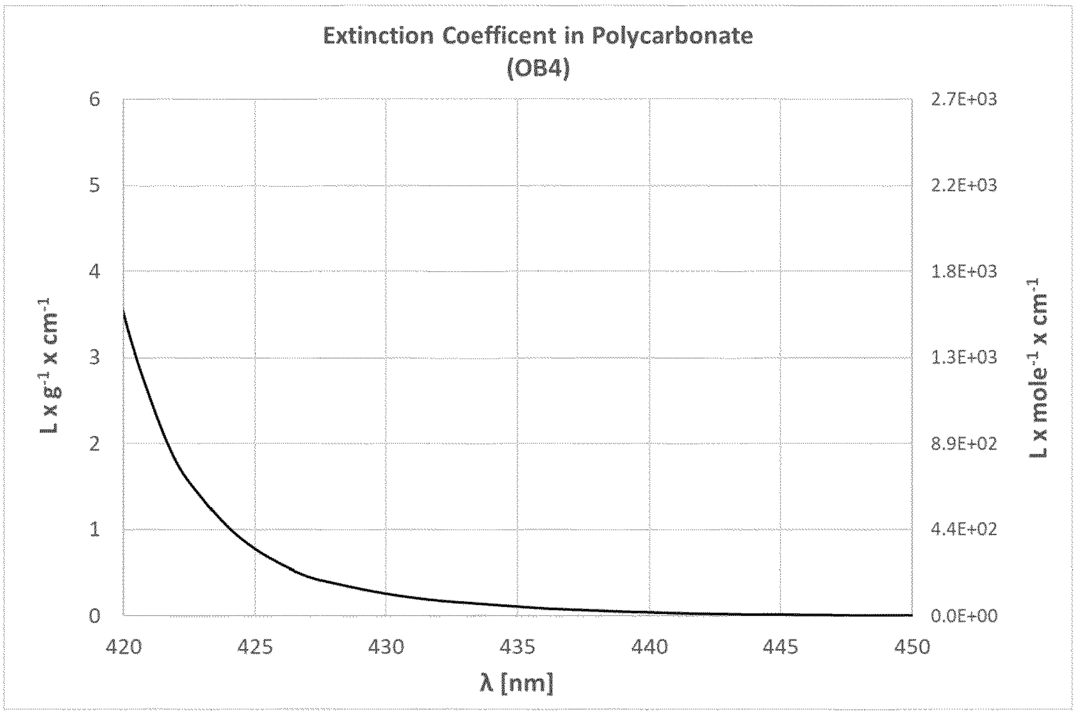


Figure 4b

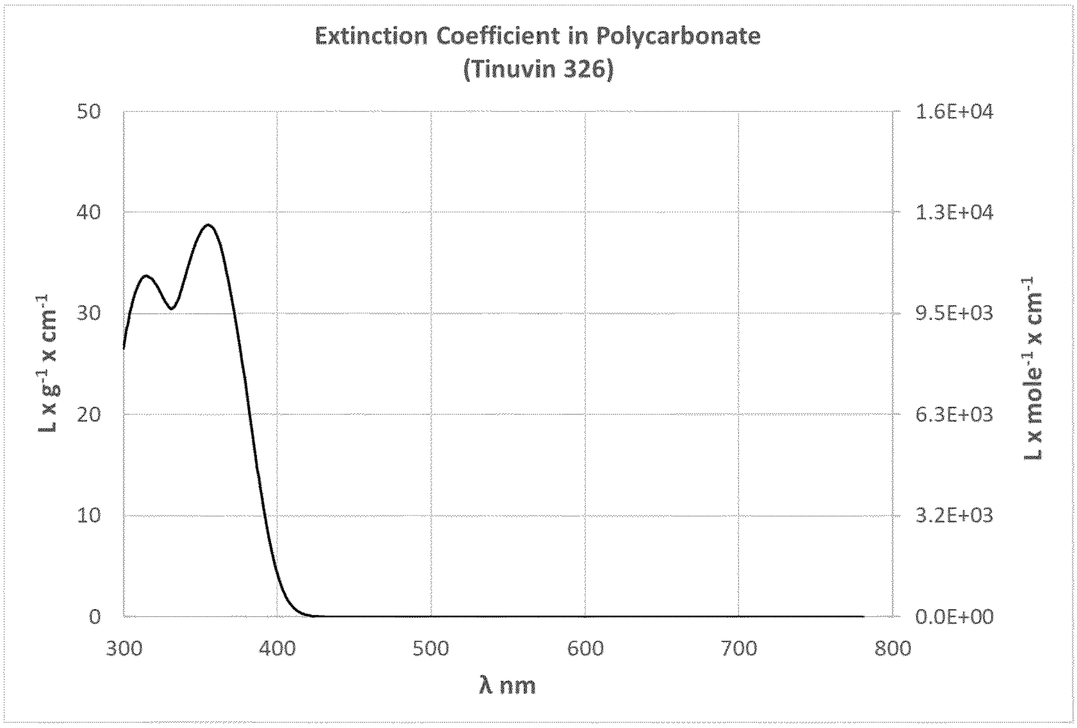


Figure 5a

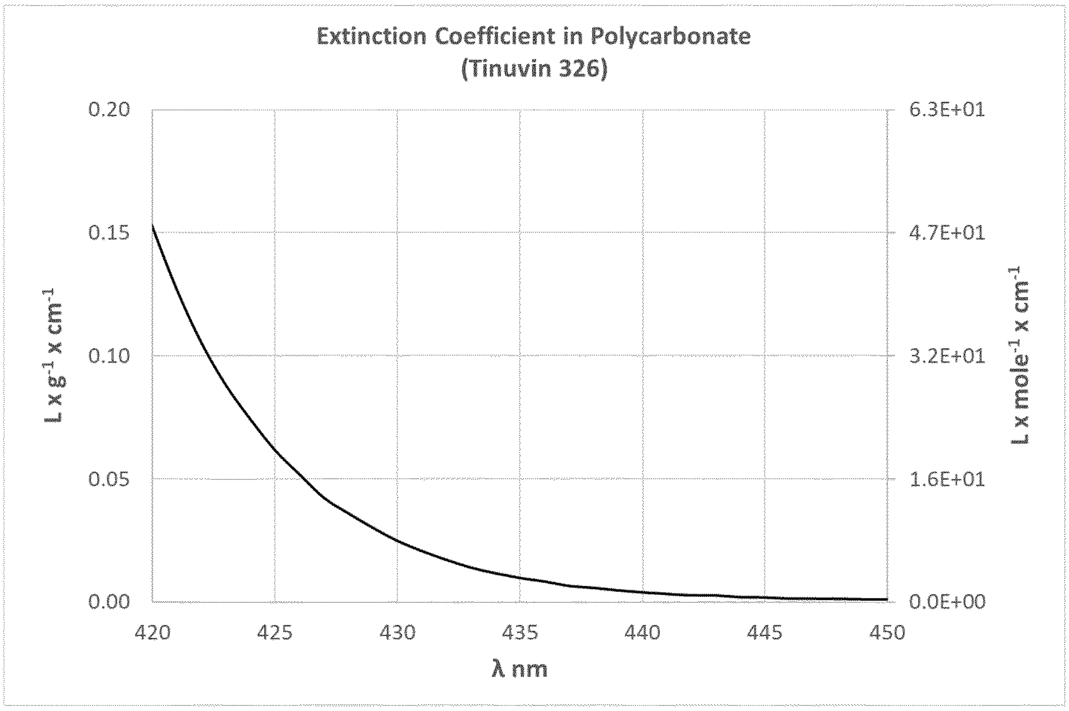


Figure 5b

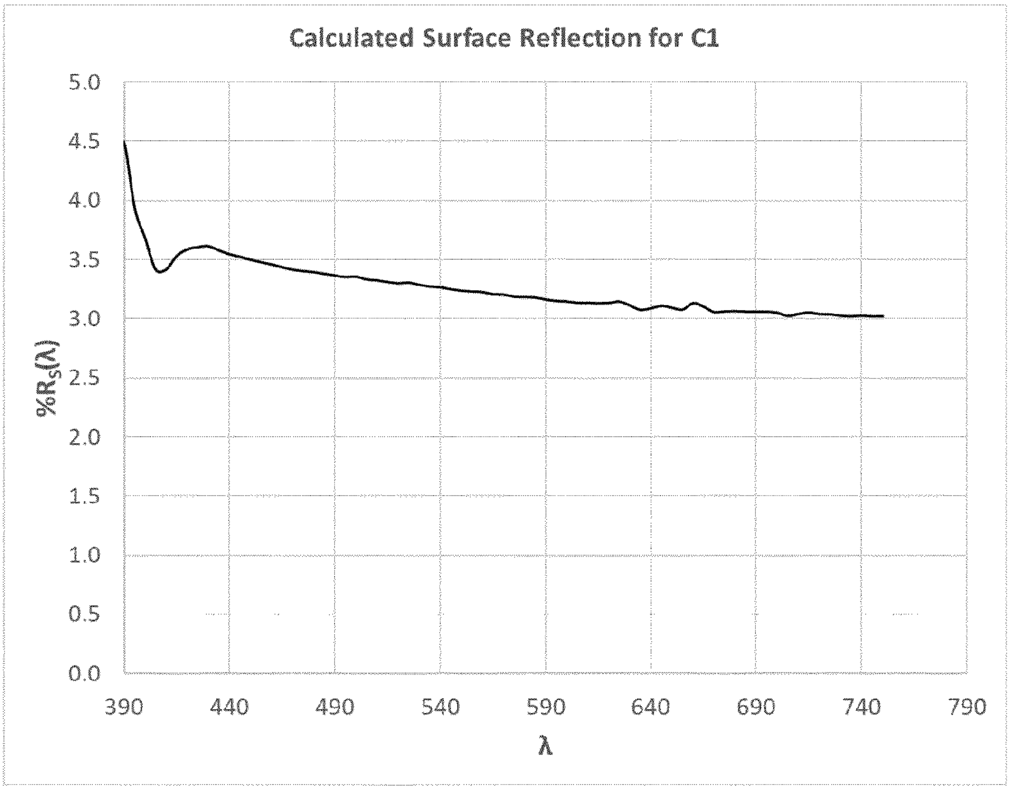


Figure 6

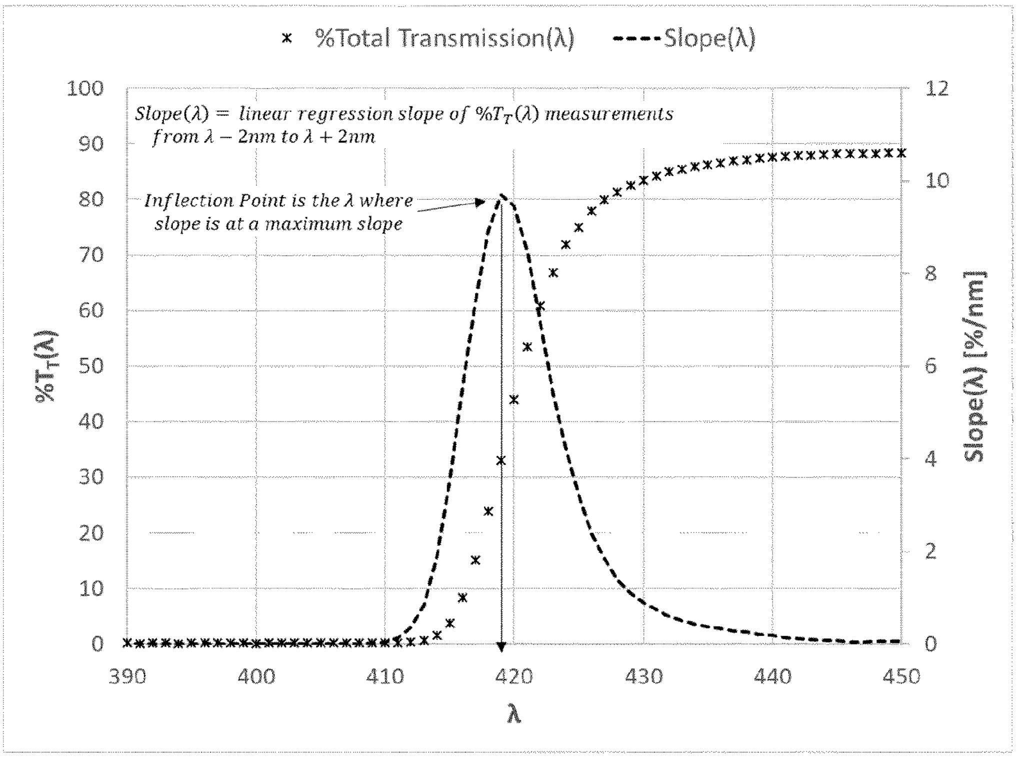


Figure 7

Europäisches Patentamt
European Patent Office
Office européen des brevets

# EUROPEAN SEARCH REPORT

Application Number
EP 21 30 6506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 203 271 A1 (ESSILOR INT (COMPAGNIE GÉNÉRALE D'OPTIQUE) [FR]) 9 August 2017 (2017-08-09) * the whole document * ----- | 1-15 | INV. G02B1/04 G02C7/10 |
| A,D | EP 0 197 508 A1 (MOBAY CORP [US]) 15 October 1986 (1986-10-15) * page 1, line 28 - page 9, line 7; tables 1-7 * ----- | 1-15 | |
| A | US 4 716 234 A (DUNKS GARY B [US] ET AL) 29 December 1987 (1987-12-29) * column 3, line 16 - column 7, line 14; figures 1,2 * ----- | 1-15 | |

TECHNICAL FIELDS SEARCHED (IPC)

G02B
G02C

The present search report has been drawn up for all claims

1

| Place of search | Date of completion of the search | Examiner |
|---|---|---|
| Munich | 4 April 2022 | Frisch, Anna Maria |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..................................................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 21 30 6506

This annex lists the patent family members relating to the patent documents cited in the above-mentioned European search report. The members are as contained in the European Patent Office EDP file on
The European Patent Office is in no way liable for these particulars which are merely given for the purpose of information.

04-04-2022

| Patent document cited in search report | Publication date | Patent family member(s) | Publication date |
| --- | --- | --- | --- |
| EP 3203271 A1 | 09-08-2017 | CN 108603946 A | 28-09-2018 |
| | | EP 3203271 A1 | 09-08-2017 |
| | | US 2019047967 A1 | 14-02-2019 |
| | | WO 2017137372 A1 | 17-08-2017 |
| EP 0197508 A1 | 15-10-1986 | CA 1289290 C | 17-09-1991 |
| | | EP 0197508 A1 | 15-10-1986 |
| US 4716234 A | 29-12-1987 | AU 592241 B2 | 04-01-1990 |
| | | BR 8706461 A | 12-07-1988 |
| | | EP 0274844 A1 | 20-07-1988 |
| | | HK 51892 A | 24-07-1992 |
| | | JP 2625451 B2 | 02-07-1997 |
| | | JP 2807217 B2 | 08-10-1998 |
| | | JP H09194536 A | 29-07-1997 |
| | | JP S63185969 A | 01-08-1988 |
| | | KR 880007496 A | 27-08-1988 |
| | | SG 50092 G | 12-06-1992 |
| | | US 4716234 A | 29-12-1987 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2008024414 A
- EP 1580591 A
- EP 0197508 A
- WO 2015097492 A
- WO 9730362 A
- US 5806834 A
- US 2009283926 A
- US 2009283924 A
- US 6328446 B
- US 4528311 A
- US 4304895 A
- JP 2000314088 A
- JP 2000241601 A
- US 6534443 B
- US 6554873 B
- US 20030020869 A
- US 2008127432 A
- US 2013244045 A
- US 2009047424 A
- US 20030165698 A
- US 4211823 A
- WO 2007088312 A
- WO 2010109154 A
- WO 2012153072 A
- EP 0614957 A


### Non-patent literature cited in the description


- **KITCHEL E.** The effects of blue light on ocular health. *Journal of Visual Impairment and Blindness,* 2000, vol. 94 (6
- **GLAZER-HOCKSTEIN.** *Retina,* 2006, vol. 26 (1), 1-4
- **ALGVERE, P. V. et al.** Age-Related Maculopathy and the Impact of the Blue Light Hazard. *Acta Ophthalmo. Scand.,* 2006, vol. 84 (4-15
- **TOMANY S.C.** Sunlight and the 10-Year Incidence of Age-Related Maculopathy. The Beaver Dam Eye Study. *Arch Ophthalmol,* 2004, vol. 122, 750-757
- **A. G. OERTLI.** Plastics Additives Handbook. 2009